# EUROPÄISCHE PATENTSCHRIFT

(11) **EP 0 616 938 B1**
(45) Veröffentlichungstag und Bekanntmachung des Hinweises auf die Patenterteilung: **04.02.1998**
(21) Anmeldenummer: 94103280.7
(22) Anmeldetag: 04.03.1994
(51) Int. Cl.: B61D 45/00, B60P 7/13

(54) **Langträger für Eisenbahnwagen mit mindestens einer Festlegevorrichtung für Wechselaufbauten und/oder Container**
Longitudinal support member of a railway car, provided with a support for removable load-carrying super- structure and/or container
Longeron pour wagon ferroviaire, muni d'un dispositif de support pour superstructure amovible et/ou conteneur

(30) Priorität: 25.03.1993 DE 4309683
(43) Veröffentlichungstag der Anmeldung: 28.09.1994
(73) Patentinhaber: Waggonfabrik Talbot GmbH & Co.KG, 52070 Aachen (DE)
(72) Erfinder: Tandetzki, Hans, 52 134 Herzogenrath (DE)

(56) Entgegenhaltungen:
- EP-A- 0 131 984
- EP-A- 0 292 369
- DE-A- 1 918 254
- DE-U- 7 333 060
- DE-U- 9 105 054
- FR-A- 2 504 484
- US-A- 3 354 838
- US-A- 3 621 236

## Beschreibung

Die Erfindung bezieht sich auf einen Langträger für Eisenbahnwagen mit einem Obergurt und mindestens einer Festlegevorrichtung, gemäß den Merkmalen des Oberbegriffs des Patentanspruchs 1.
Es ist bei derartigen Vorrichtungen bisher bekannt (DE 91 05 054.5 U1), an außenliegenden Langträgern von Eisenbahnwagen für den Transport von Wechselaufbauten und/oder Containern klappbare Riegelzapfen mit Tragplatten vorzusehen, um zum einen für Container mit unterschiedlichen Längen jeweils an der passenden Stelle eine formschlüssige horizontale Festlegung zur Verfügung zu haben, zum anderen aber die Riegelzapfen beim Transport anderer Güter - bei sogenannten Taschenwagen z. B. ganze Sattelauflieger von Straßenfahrzeugen - vollkommen aus der Fahrzeugoberseite bzw. aus dem Raum zwischen den Langträgern wegklappen zu können.

Zum Transport von überbreiten (bis 2,6 m Breite) oder normalbreiten Sattelaufliegern mit seitlichem Unterfahrschutz auf der Schiene mußten die Langträger-Obergurte gegenüber früheren Ausführungen deutlich schmaler werden, weil eine größere Außenbreite nicht in das UIC-Lichtraumprofil passen würde.
Die Tragplatten liegen bei hochgeklapptem Riegelzapfen mit ihrer Unterseite auf dem glatt durchgehenden Obergurt des Langträgers auf und sind an einer geringfügig seitlich außen über die Langträger herausragenden Lagerstelle angelenkt.

Man mußte bei diesen Fahrzeugen aus Festigkeitsgründen eine oberhalb der Langträger-Obergurte liegende und relativ dicke Lagerachse vorsehen, wobei die Tragplatte für den Riegelzapfen bei großer Auskragung gegenüber dem schmalen Obergurt nur relativ dünn sein durfte, damit die Oberseite des aufzulegenden Wechselaufbaus oder Containers und insbesondere deren Ecken wiederum im vorgeschriebenen Lichtraumprofil blieben. Wegen des geringen Widerstandsmoments eines solchen flacheren Querschnitts ist zur Herstellung der Tragplatten nur ein hochfester Stahl verwendbar, der zum einen teuer und zum anderen nur mit hohem Aufwand schweißbar ist. Die hohe Position der Lagerung kann zu Kollisionen mit Ladegeschirren führen.

Eine andere bekannte Festlegevorrichtung (EP 0 131 984 B1) umfaßt an einer zentralen Langträgerstruktur eines Eisenbahn-Containertragwagens über querlaufende Ausleger befestigte längslaufende zylindrische Träger, auf denen neben festen auch bewegliche Tragplatten und Riegelzapfen zum Festlegen verschiedener Containertypen verschiebbar und klappbar gelagert sind. Die dort beschriebenen Fahrzeuge haben keine außenliegenden, durchlaufenden Langträger, so daß bei ihnen das vorstehend beschriebene Problem nicht auftritt.

Aus EP-A-0 292 369 ist es bekannt, an die Außenseiten der glatt durchlaufenden äußeren Langträger von Plattform-Güterwagen mehrere Konsolen anzusetzen, die Lagerstellen und Stützflächen für die Gebrauchsstellung von schwenkbar und längs verschiebbar gelagerten Festlegevorrichtungen für Container tragen. Die Festlegevorrichtungen können bei dem bekannten Güterwagen in eine Ruhestellung in Unterbrechungen zwischen den seitlichen Stützflächen abgesenkt werden, ohne seitlich über den Außenumriß der Konsolen hinauszuragen. Die Konsolen und Stützflächen liegen seitlich außerhalb der Langträger, die selbst keine Ausnehmungen haben.
Eine ähnliche Konstruktion, bei der die Ruhestellung der Festlegevorrichtungen jedoch außerhalb des Umrisses der Konsolen liegt, ist aus FR-A-2 504 484 bekannt.
Weil die besagten Konsolen sich von den äußeren Längsseiten der Langträger des Güterwagens nach außen erstrecken, kann man die Langträger selbst nicht an die Lichtraumgrenzen heranführen. Deshalb ist das zwischen ihnen verfügbare Platzangebot geringer als die Breite von üblichen ISO-Containern, von der die Querabstände der Festlegevorrichtungen in ihrer Gebrauchsstellung bestimmt sind.

Die Erfindung hat die Aufgabe, Langträger der eingangs genannten Art so auszuführen, daß die Tragplatten unter Beibehaltung eines größtmöglichen Platzangebots zwischen den Langträgern aus einem billigeren Werkstoff gefertigt werden können und daß deren Lagerung sich besser in den durch die Langträger vorgegebenen Außenumriß des Eisenbahnwagens einfügt.

Diese Aufgabe wird erfindungsgemäß mit den kennzeichnenden Merkmalen des Patentanspruchs 1 gelöst.
Die kennzeichnenden Merkmale der Unteransprüche geben vorteilhafte Weiterbildungen der Erfindung an.

Weitere Einzelheiten und Vorteile des Gegenstands ergeben sich aus der Zeichnung eines Ausführungsbeispiels und dessen folgender detaillierter Beschreibung.

Es zeigen
- Figur 1: eine Draufsicht auf eine Festlegevorrichtung mit einer gemeinsamen Lagerstelle für zwei unabhängig voneinander klappbaren Tragplatten und Riegelzapfen,
- Figur 2: eine Seitenansicht derselben Lagerstelle, und
- Figur 3: eine Schnittansicht entlang Linie III-III in Figur 2.

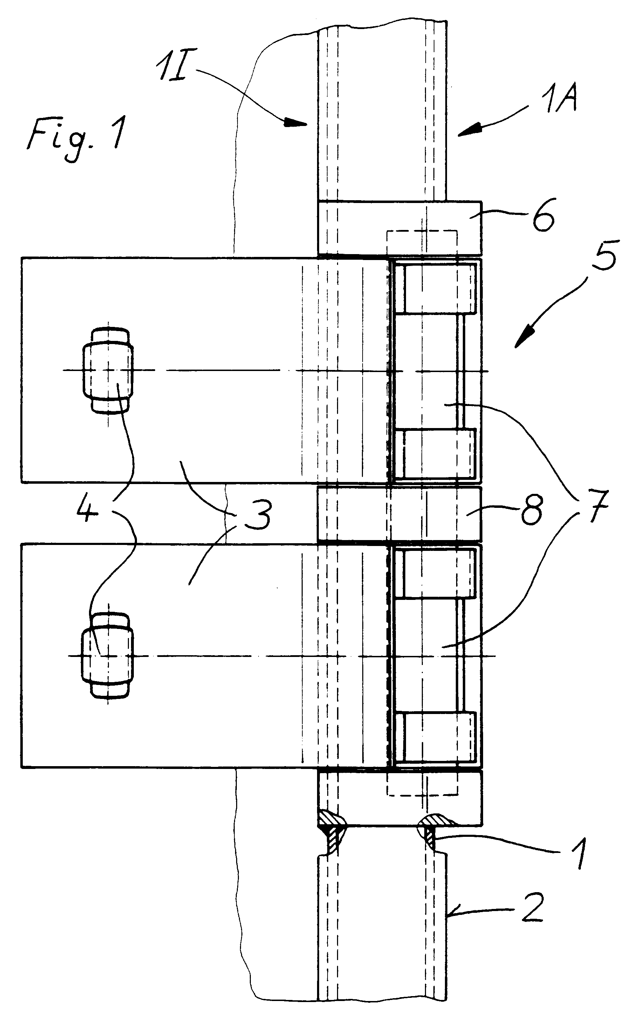

Ein durchlaufender Langträger 1 eines nicht weiter gezeigten Eisenbahnwagens zum Gütertransport hat gemäß **Figur 1** einen Obergurt 2, der die Oberseite des Langträgers 1 und den oberen Außenrand einer gedachten Ladefläche bildet. Eine Außenseite 1A des Langträgers gibt den seitlichen Außenumriß des Wagens vor, während eine Innenseite 1I desselben Langträgers eine (vertikale) Seitenwand z. B. einer Tasche zur Aufnahme eines Straßenfahrwerks eines mit dem Eisenbahnwagen zu transportierenden Sattelaufliegers bildet. Zum Auflegen von Rahmenteilen des nicht dargestellten Ladeguts des Eisenbahnwagens - dies können neben Wechselaufbauten oder Containern auch Rahmenteile von übergroßen Sattelaufliegern sein - sind Tragplatten 3 vorgesehen, die sich in Gebrauchsstellung vom Langträger 1 ausgehend zur Längsmitte des Eisenbahnwagens hin erstrecken. Mit den Tragplatten sind Riegelzapfen (sog. Twist-Lock-Zapfen) 4 der üblichen Bauart fest verbunden, die in der Gebrauchsstellung der Tragplatten 3 vertikal über die Ladefläche des Eisenbahnwagens hinaus nach oben ragen.

Wechselbehälter, Container oder auch passende Beschläge an Sattelaufliegern werden bekanntlich zum Transport auf dem Eisenbahnwagen mit einem Hebezeug auf mehrere Tragplatten 3 abgelegt, wobei die Riegelzapfen 4 in entsprechende Ausnehmungen von Rahmenteilen dieser zu transportierenden Gegenstände eingeführt werden und letztere formschlüssig zumindest in der horizontalen Ebene festlegen.

In Figur 1 sind zwei nebeneinander angeordnete Tragplatten 3 mit einer gemeinsamen Lagerstelle 5 dargestellt; selbstverständlich können auch einzelne Tragplatten 3 mit individuellen Lagerstellen an dem Langträger 1 vorgesehen werden. In dieser Lagerstelle sind die Tragplatten 3 aus der Gebrauchsstellung in eine Ruhestellung schwenkbar. Natürlich sind über den Längsverlauf des Langträgers 1 mehrere solcher Lagerstellen mit einzelnen oder doppelten Tragplatten in vorgegebenen Abständen verteilt.

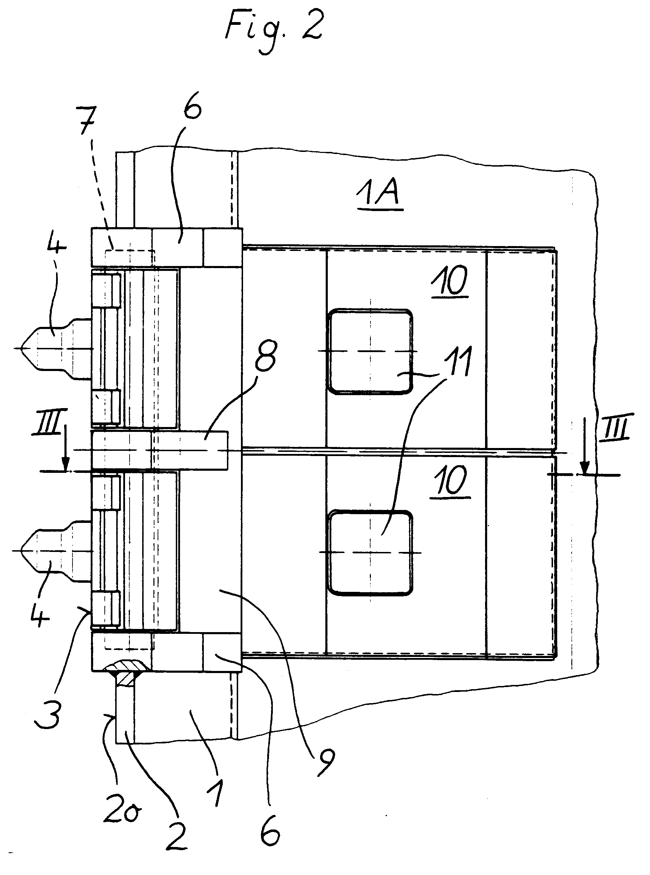

Der Langträger 1 und sein Obergurt 2 haben, wie man besser in **Figur 2** erkennt, im Bereich der Lagerstelle 5 eine Ausnehmung oder Lücke. Darin ist eine mechanische Tragstruktur der Lagerstelle 5 eingesetzt und durch Schweißen befestigt.
Die Tragstruktur umfaßt im wesentlichen zwei stirnseitige Backen 6, die an den einander gegenüberliegenden Enden bzw. Stirnseiten der Ausnehmung an dem Langträger befestigt sind, und eine sich zwischen diesen erstreckende zylindrische Achse 7. Letztere ist an ihren beiden Enden jeweils in eine - durchgängig oder wie hier als Sackloch ausgeführte - Bohrung einer Backe 6 eingesetzt und mit der Backe verschweißt.

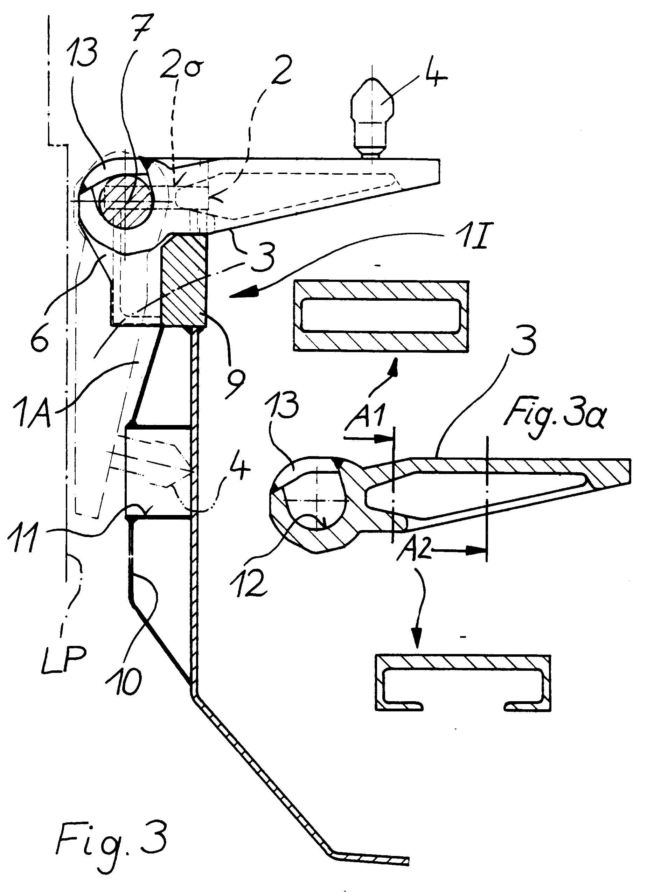

Im vorliegenden Fall ist ferner wegen der Doppelanordnung von Tragplatten 3 an einer gemeinsamen Lagerstelle eine Zwischenbacke 8 vorgesehen, welche von der Achse 7 durchdrungen ist. Ferner umfaßt die Tragstruktur einen parallel zur Achse 7 und zum Langträger 1 verlaufenden und ebenfalls die beiden stirnseitigen Backen 6 verbindenden Balken 9. Dessen - massiver - Querschnitt wiederum ist in **Figur 3** sichtbar; seine Unterseite liegt auf dem Grund der Ausnehmung im Langträger 1 auf. Die Zwischenbacke 8 ist wie die Backen 6 an den Balken 9 angeschweißt.

Der Langträger 1 ist hier ein Kastenprofil, dessen u-förmiger Basisteil erst durch Aufschweißen des Obergurts verschlossen wird. An den Basisteil schließt sich nach unten hin ein Wandblech der Tasche eines Taschenwagens an. Die Ausnehmung zum Einsetzen der Lagerstelle kann entweder - wie hier gezeigt - den Langträger als Lücke vollständig unterbrechen, so daß der Balken 9 auf der Oberkante der anschließenden Blechwand aufliegt, oder es kann ein Stück des Basisteils, zumindest dessen unterer Steg, stehenbleiben, um dem Balken eine breitere Basis zu geben. Diese Anordnung wird vor allem dort zu verwenden sein, wo keine Taschenseitenwand unter dem Langträger vorgesehen ist.

An der Außenseite 1A des Langträgers 1 bzw. der Blechwand sind gemäß Fig. 2 und 3 Bleche 10 mit Löchern 11 vorgesehen, in welche die Riegelzapfen 4 in der Ruhestellung der Tragplatten 3 - die in Fig. 3 strichpunktiert angedeutet ist - eintauchen können. Die Tragplatten 3 werden um die Achse 7 in diese Ruhestellung außerhalb des von den Innenseiten 1I der Langträger 1 bzw. den sich nach unten anschließenden Blechwänden begrenzten (Taschen-)Raums weggeschwenkt, wenn die Position der zugehörigen Riegelzapfen nicht zu dem aufzuladenden Wechselbehälter oder Container paßt oder wenn ein Sattelauflieger transportiert werden soll, dessen Straßenfahrwerk in die Tasche hineingestellt wird.

In der durchgezogen gezeichneten Gebrauchsstellung liegt jede Tragplatte 3 mit ihrer Unterseite in deren Bereich zwischen der Achse 7 und dem Riegelzapfen 4 auf der als Auflager dienenden Oberseite des Balken 9 auf; diese Unterseite durchläuft unterhalb der Oberseite 2o des Obergurts 2 die eigens hierfür vorgesehene Ausnehmung.
Fig. 2 und 3 zeigen auch, daß sich die Achse 7 im wesentlichen in der Ebene des Obergurts 2 erstreckt und durch die festen Verbindungen zwischen den Backen 6 und dem Langträger 1 einerseits und zwischen den Backen 6 und der Achse 7 andererseits ebenso wie der parallellaufende Balken 9 in den Kraftfluß (Längs- und Biegekräfte) des Langträgers 1 eingebunden ist. Hierbei bildet die Tragstruktur aus Backen 6, Achse 7 und Balken 9 einen Rahmen, der die Ausnehmung so versteift, daß die Statik des Langträgers durch die Lücke nicht nennenswert beeinträchtigt wird, weil diese durch die Tragstruktur geschlossen ist. Es ist möglich, diese komplett vorzufertigen und sie dann in der vorbereiteten Ausnehmung des Langträgers zu befestigen. Längskräfte, die bei Auflaufstößen Spitzenwerte erreichen können, werden durch die flächige Anlage der Backen 6 an den Seiten der Ausnehmung sicher aufgenommen.

Das vorgegebene Lichtraumprofil LP - in Fig. 3 als im wesentlichen vertikal verlaufende Linie strichpunktiert angedeutet - wird bestmöglich ausgenutzt, und die gesamte Lagerstelle 5 fügt sich optimal in den Außenumriß des Eisenbahnwagens ein.

Ebenfalls gut sichtbar in Fig. 3 ist die Gestaltung der Tragplatte 3 als Biegebalken mit einem seitlichen Umriß, der sich zum freien Ende hin entsprechend dem Biegemomentenverlauf verjüngt, wobei die Tragplattenoberfläche horizontal bzw. parallel zur Ladefläche verläuft. Die Tragplatte 3 ist vorzugsweise als Stahlgußteil ausgeführt, kann aber auch als Schweißkonstruktion oder Schmiedeteil hergestellt werden.
In **Figur 3a** wird durch einen Längsschnitt verdeutlicht, daß die Tragplatte 3 zur Gewichtsreduzierung gehöhlt ist. In dem Bereich der größten Höhe - und des größten Widerstandsmoments - wo die Unterseite der Tragplatte 3 auf dem Balken 9 aufliegt, ist ihr Querschnitt geschlossen, während er zum freien Ende hin taschenartig offen ist (hierzu die beiden nicht näher bezeichneten Schnitte bei A1 und A2). Gewichtsreduzierung ist für diese Tragplatten anzustreben, weil sie vom Ladepersonal von Hand zwischen Gebrauchs- und Ruhestellung hin und her geklappt werden.

Lagerseitig ist an die Tragplatte 3 ein offenes Maul 12 angeformt, dessen innerer Umriß und lichter Querschnitt dem Durchmesser der Achse 7 angepaßt ist; zur Montage der Tragplatte 3 wird das noch offene Maul 12 - mit der Öffnung nach unten - auf die Achse 7 gesteckt, sodann die Tragplatte in die Gebrauchsstellung geschwenkt und anschließend das Maul 12 durch Einschweißen eines oder zweier Schlußstücke 13 verschlossen. Die Schenkel des Mauls 12 sind vorzugsweise so kräftig dimensioniert, daß sie sich auch bei den bereits erwähnten Auflaufstößen nicht aufbiegen.

Folglich wird das Schlußstück im Betrieb allenfalls geringfügig auf Zug belastet und verhindert ggf. ein Aufbiegen des Mauls 12 bei Überbelastung der Tragplatte 3.
Bei einem allfälligen Austausch der Tragplatte 3 kann es durch Wegschleifen der Schweißnähte ohne Ausbau der Lagerstelle rasch entfernt werden. Diese Konfiguration trägt auch vorteilhaft zu einer kostengünstigen Fertigung der Festlegevorrichtung bei.

In einer anderen, hier nicht gezeigten Variante könnte das Maul 12 auch mit lösbaren Mitteln, z. B. mit Schrauben, verschlossen werden.

## Patentansprüche

1. Langträger (1) für die Außenlängsseiten von Eisenbahnwagen, insbesondere Taschenwagen, mit einem Obergurt (2) und mindestens einer Festlegevorrichtung zum zumindest horizontalen Festlegen von Wechselaufbauten und/oder Containern auf der Ladefläche der Eisenbahnwagen, wobei
- im Bereich des Obergurts Lagerstellen (5) für klappbare, mit Riegelzapfen (4) versehene Tragplatten (3) vorgesehen sind und
- die Tragplatten aus einer Gebrauchsstellung - in der sie sich zum Auflegen der Wechselaufbauten und/oder Container von der Außenkante der Ladefläche nach innen erstrecken und sich mit ihrer Unterseite im Bereich zwischen der Lagerung und dem Riegelzapfen abstützen, während letztere nach oben weisend über die Ladefläche des Wagens hinausragen - durch Schwenken in den Lagerstellen in eine Ruhestellung außerhalb des von den Langträgern begrenzten Raums wegklappbar sind,
**dadurch gekennzeichnet,**
daß in der Oberseite jedes Langträgers (1) im Bereich einer Lagerstelle (5) eine Ausnehmung vorgesehen ist, in welche eine mechanische Tragstruktur (6, 9) der Lagerstelle (5) fest eingesetzt ist,
daß eine Achse (7) der Lagerstelle (5) innerhalb der Tragstruktur (6, 9) entlang der Oberkante des Langträgers (1) angeordnet ist und
daß sich die Unterseite der auf der Achse (7) schwenkbar gelagerten Tragplatte (3) der Festlegevorrichtung in der Gebrauchsstellung durch die Ausnehmung unterhalb der Oberkante des Langträgers (1) nach innen erstreckt.

2. Langträger mit Festlegevorrichtung nach Anspruch 1,
**dadurch gekennzeichnet,**
daß sich die Achse (7) einstückig über die Länge der Ausnehmung erstreckt und sich - in Längsrichtung des Eisenbahnwagens gesehen - zumindest teilweise innerhalb des von dem Langträger (1) gebildeten Außenumrisses befindet.

3. Langträger mit Festlegevorrichtung nach Anspruch 1 oder 2,
**dadurch gekennzeichnet,**
daß jede Tragstruktur (6, 9) mindestens zwei an den Endseiten der Ausnehmung befestigte Backen (6) umfaßt, zwischen denen sich die Achse (7) und ein parallel zu dieser angeordneter Balken (9) erstrecken, wobei der Balken (9) auf dem Grund der Ausnehmung im Langträger (1) aufliegt und mit seiner Oberseite ein Auflager für die Unterseite der Tragplatte (3) in einem Bereich zwischen der Achse und dem Riegelzapfen (4) bildet.

4. Langträger mit Festlegevorrichtung nach einem der vorstehenden Ansprüche,
**dadurch gekennzeichnet,**
daß die Tragplatte (3) als Biegebalken mit sich von der Lagerstelle (5) zum Riegelzapfen (4) hin stetig verjüngendem Seitenumriß ausgeführt ist.

5. Langträger mit Festlegevorrichtung nach Anspruch 4,
**dadurch gekennzeichnet,**
daß die Tragplatte (3) im Bereich zwischen der Lagerstelle (5) und dem Riegelzapfen einen gehöhlten Querschnitt aufweist.

6. Langträger mit Festlegevorrichtung nach einem der vorstehenden Ansprüche,
**dadurch gekennzeichnet,**
daß die Tragplatte (3) an ihrem lagerseitigen Ende mit einem offenen, auf die Achse aufsteckbaren Maul (12) versehen ist.

7. Langträger mit Festlegevorrichtung nach Anspruch 6,
**dadurch gekennzeichnet,**
daß ein mit der Tragplatte (3) fest verbindbares Schlußstück (13) zum Verschließen des Mauls (12) nach dem Aufstecken auf die Achse (7) vorgesehen ist.

8. Langträger mit Festlegevorrichtung nach Anspruch 6,
**dadurch gekennzeichnet,**
daß lösbare Mittel, insbesondere Schrauben, zum Verschließen des Maus (12) nach dem Aufstecken auf die Achse (7) vorgesehen sind.

## Claims

1. Longitudinal load-bearing member (1) for the outer longitudinal sides of railway carriages, in particular piggyback carriages, having a top flange (2) and at least one securing means for at least horizontally securing interchangeable superstructures and/or containers on the loading surface of the railway carriages,
- bearing locations (5) for swing-action load-bearing plates (3) provided with twistlock bolts (4) being provided in the region of the top flange, and
- it being possible, by pivoting in the bearing locations, for the load-bearing plates to be swung away out of a use position - in which they extend inwards, from the outer edge of the loading surface, for supporting the interchangeable superstructures and/or containers and are supported, by means of their under-side, in the region between the mount and the twistlock bolts, while the latter project upwards beyond the loading surface of the carriage - into a rest position outside the area bounded by the longitudinal load-bearing members,
characterized in that a recess is provided in the top side of each longitudinal load-bearing member (1), in the region of the bearing location (5), and has a mechanical load-bearing structure (6, 9) of the bearing location (5) introduced fixedly in it, in that a spindle (7) of the bearing location (5) is arranged, within the load-bearing structure (6, 9), along the top edge of the longitudinal load-bearing member (1), and in that, in the use position, the underside of the load-bearing plate (3) of the securing means, said plate being mounted pivotably on the spindle (7), extends inwards, through the recess, beneath the top edge of the longitudinal load-bearing member (1).

2. Longitudinal load-bearing member with securing means according to Claim 1, characterized in that the spindle (7) extends in a single piece over the length of the recess and - as seen in the longitudinal direction of the railway carriage - is located, at least in part, within the outline formed by the longitudinal load-bearing member (1).

3. Longitudinal load-bearing member with securing means according to Claim 1 or 2, characterized in that each load-bearing structure (6, 9) comprises at least two jaws (6), which are fastened on the end sides of the recess and between which the spindle (7) and a bar (9), which is arranged parallel to the latter, extend, the bar (9) resting on the base of the recess in the longitudinal load-bearing member (1) and forming, by means of its top side, a support for the underside of the load-bearing plate (3) in a region between the spindle and the twistlock bolt (4).

4. Longitudinal load-bearing member with securing means according to one of the preceding claims, characterized in that the load-bearing plate (3) is designed as a bending bar with, as seen in side view, an outline which tapers continuously from the bearing location (5) to the twistlock bolt (4).

5. Longitudinal load-bearing member with securing means according to Claim 4, characterized in that the load-bearing plate (3) has a hollowed cross-section in the region between the bearing location (5) and the twistlock bolt.

6. Longitudinal load-bearing member with securing means according to one of the preceding claims, characterized in that, at its bearing-side end, the load-bearing plate (3) is provided with an open mouth (12) which can be fitted onto the spindle.

7. Longitudinal load-bearing member with securing means according to Claim 6, characterized in that there is a closure element (13) which can be connected fixedly to the load-bearing plate (3) and is intended for closing the mouth (12) after the latter has been fitted onto the spindle (7).

8. Longitudinal load-bearing member with securing means according to Claim 6, characterized in that there are releasable means, in particular screws, for closing the mouth (12) after the latter has been fitted onto the spindle (7).

## Revendications

1. Longeron (1) pour les longs côtés extérieurs de wagons de chemin de fer, en particulier de wagons à poche fixe, avec une semelle supérieure (2) et au moins un dispositif de fixation pour la fixation au moins horizontale de superstructures interchangeables et/ou de conteneurs sur le plateau de chargement des wagons de chemin de fer, dans lequel
- il est prévu, dans la région de la semelle supérieure, des points d'appui (5) pour des plaques portantes rabattables (3), pourvues de boulons de verrouillage (4), et
- les plaques portantes peuvent être rabattues par pivotement dans les points d'appui, depuis une position d'utilisation - dans laquelle elles s'étendent vers l'intérieur à partir des arêtes extérieures du plateau de chargement pour le dépôt des superstructures interchangeables et/ou des conteneurs et prennent appui par leur côté inférieur dans la région située entre l'appui et le boulon de verrouillage, tandis que ces derniers pointent vers le haut au-dessus du plateau de chargement du wagon - vers une position de repos à l'extérieur de l'espace délimité par les longerons,
caractérisé en ce qu'il est prévu, dans le côté supérieur de chaque longeron (1), dans la région d'un point d'appui (5), un évidement dans lequel est fixée une structure portante mécanique (6, 9) du point d'appui (5), en ce qu'un axe (7) du point d'appui (5) est disposé à l'intérieur de la structure portante (6, 9) le long de l'arête supérieure du longeron (1), et en ce que le côté inférieur de la plaque portante (3) du dispositif de fixation, supportée de façon pivotante sur l'axe (7), s'étend vers l'intérieur, en position d'utilisation, à travers l'évidement en dessous de l'arête supérieure du longeron (1).

2. Longeron avec un dispositif de fixation suivant la revendication 1, caractérisé en ce que l'axe (7) s'étend d'une seule pièce sur la longueur de l'évidement et se trouve - vu dans la direction longitudinale du wagon de chemin de fer - au moins en partie à l'intérieur du contour extérieur formé par le longeron (1).

3. Longeron avec un dispositif de fixation suivant la revendication 1 ou 2, caractérisé en ce que chaque structure portante (6, 9) comprend au moins deux mâchoires (6) fixées aux côtés d'extrémité de l'évidement, entre lesquelles s'étendent l'axe (7) et une poutre (9) disposée parallèlement à celui-ci, la poutre (9) reposant sur le fond de l'évidement dans le longeron (1) et formant avec son côté supérieur une face d'appui pour le côté inférieur de la plaque portante (3) dans une région située entre l'axe et le boulon de verrouillage (4).

4. Longeron avec un dispositif de fixation suivant l'une des revendications précédentes, caractérisé en ce que la plaque portante (3) est réalisée comme une poutre de flexion avec un contour latéral se rétrécissant de façon continue depuis le point d'appui (5) jusqu'au boulon de verrouillage (4).

5. Longeron avec un dispositif de fixation suivant la revendication 4, caractérisé en ce que la plaque portante (3) présente une section transversale évidée dans la région située entre le point d'appui (5) et le boulon de verrouillage.

6. Longeron avec un dispositif de fixation suivant l'une des revendications précédentes, caractérisé en ce que la plaque portante (3) est pourvue, à son extrémité du côté de l'appui, d'un orifice (12) ouvert, pouvant être engagé sur l'axe.

7. Longeron avec un dispositif de fixation suivant la revendication 6, caractérisé en ce qu'il est prévu une pièce de fermeture (13) pouvant être solidement assemblée à la plaque portante (3), pour fermer l'orifice (12) après l'engagement sur l'axe (7).

8. Longeron avec un dispositif de fixation suivant la revendication 6, caractérisé en ce qu'il est prévu des moyens desserrables, en particulier des vis, pour la fermeture de l'orifice (12) après l'engagement sur l'axe (7).
